# EUROPEAN PATENT SPECIFICATION

(11) **EP 4 330 149 B1**
(45) Date of publication and mention of the grant of the patent: **15.10.2025**
(21) Application number: 22722878.0
(22) Date of filing: 29.04.2022
(51) Int. Cl.: B65D 5/02, B65D 65/12, B65D 65/46

(54) **RECYCLABLE CONTAINER**
WIEDERVERWERTBAREN BEHÄLTER
RÉCIPIENT RECYCLABLE

(30) Priority: 30.04.2021 US 202163182009 P
(43) Date of publication of application: 06.03.2024
(73) Proprietor: Multi Packaging Solutions UK Limited, Nottingham, Nottinghamshire NG6 8WR (GB)
(72) Inventor: KINDNESS, Andrew A., Arbroath DD11 4JG (GB); ALEXANDER, Scott, Richmond Greater London TW10 6LF (GB)
(74) Representative: Dehns
(86) International application number: PCT/GB2022/051100
(87) International publication number: WO 2022/229658

(56) References cited:
- EP-A1- 0 638 482
- DE-A1- 102006 055 459
- US-A1- 2011 005 647
- US-A1- 2021 114 797

## Description

### FIELD

This application relates to a container.

### BACKGROUND

Many paperboard boxes in the rigid board packaging field utilize embedded magnets as a means to hold a lid or flap in place and keep the box in a closed position. Drawbacks to current designs include recyclability of the packaging. At the end of its lifecycle, a rigid board box must be disassembled to remove the embedded magnets before the box can be recycled. This adds time and wasted material, and thus is not an environmentally-friendly practice.

Accordingly, those skilled in the art continue research and development in the field of recyclable packaging.

US 2021/114797 A1 discloses a prior art container as set forth in the preamble of claim 1.

EP 0 638 482 A1 discloses a prior art packaging carton.

DE 10 2006 055459 A1 discloses a prior art firewood carrying bag and US 2011/005647 A1 discloses a prior art adjustable, portable, flexible equipment wrap.

### SUMMARY

From one aspect, there is provided a container as recited in claim 1.

Features of embodiments are set forth in the dependent claims.

### BRIEF DESCRIPTION OF THE DRAWINGS

FIG. 1 is a perspective view of a container;
FIG. 2 is a perspective view of a portion of the container of FIG. 1;
FIG. 3 is a perspective view of a closure apparatus;
FIG. 4 is a top plan view of the closure apparatus of FIG. 3;
FIG. 5 is a side view of the closure apparatus of FIG. 3;
FIG. 6 is a perspective view of a closure apparatus;
FIG. 7 is a top plan view of the closure apparatus of FIG. 6;
FIG. 8 is a side view of the closure apparatus of FIG. 6;
FIG. 9 is a perspective view of a closure apparatus;
FIG. 10 is a top plan view of the closure apparatus of FIG. 9;
FIG. 11 is a side view of the closure apparatus of FIG. 9;
FIG. 12 is a perspective view of a closure apparatus;
FIG. 13 is a top plan view of the closure apparatus of FIG. 12;
FIG. 14 is a side view of the closure apparatus of FIG. 12.

### DETAILED DESCRIPTION

The following detailed description refers to the accompanying drawings, which illustrate specific examples of the disclosed containers and closure apparatus. It will be understood that the disclosed examples are merely exemplary embodiments of the way in which certain aspects of the invention can be implemented and do not represent an exhaustive list of all of the ways the invention may be embodied. Other examples having different structures and operations do not depart from the scope of the present disclosure. Like reference numerals may refer to the same feature, element, or component in the different drawings. The figures are not necessarily to scale and some features may be exaggerated or minimized to show details of particular components. Throughout the present disclosure, any one of a plurality of items may be referred to individually as the item and a plurality of items may be referred to collectively as the items. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

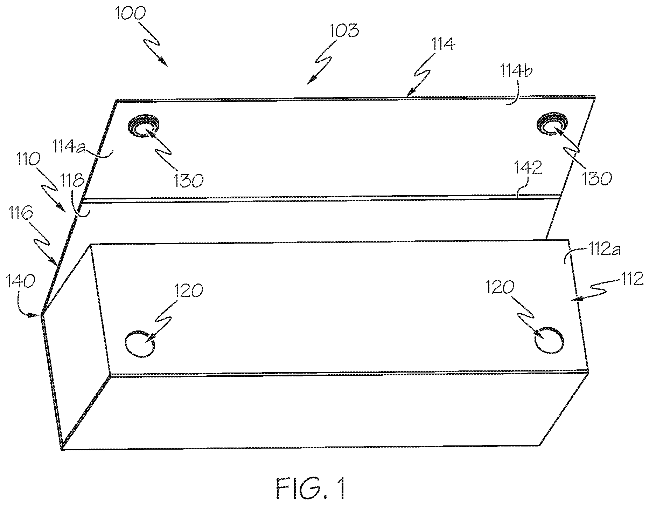

Referring to FIG. 1, disclosed is a container 100. A blank 103 comprises a plurality of predefined fold lines 140 that define a plurality of wall panels 110. The plurality of wall panels 110 define the container 100. Any one of the fold lines of the plurality of predefined fold lines 140, as well as any other fold lines and/or hinge lines described here-in, may include any suitable predefined or preformed line of weakening and/or line of separation known to those skilled in the art and guided by the teachings herein provided, such as a crease, a score, a perforation, or the like. Generally, the plurality of predefined fold lines 140 provide a means to transform the blank 103 into a plurality of separate but integral wall panels and flaps. For example, one or more of the plurality of wall panels 110 are hingedly moved (e.g., rotated or folded) about an adjacent fold line from a flat configuration, or first configuration, to a constructed configuration, or second configuration, such that the plurality of wall panels 110 form the container 100.

The container 100 may be formed from or may include a cellulosic material. Various cellulosic materials may be used to manufacture the disclosed container 100 without departing from the scope of the present disclosure. Examples of appropriate cellulosic materials useful as or in the container 100 include, but are not limited to, corrugated medium, liner board, solid bleached sulfate (SBS), unbleached kraft, cardboard, fiberboard, paperboard, foamboard and folding boxboard (FBB).

Furthermore, the container 100 may have a caliper (thickness) ranging, for example, from about 4 points to about 30 points (0.004 inch to 0.030 inch). In one example, the caliper range is from about 8 points to about 16 points. In another example, the caliper range is from about 10 points to about 13 points.

Referring to FIG. 1, the plurality of wall panels 110 include a front wall panel 112. The front wall panel 112 has at least one opening 120. In one example, the front wall panel 112 has at least two of the at least one opening 120. The at least one opening 120 is generally round.

Still referring to FIG. 1, the plurality of wall panels 110 include a lid 116. The lid 116 has a cover panel 118 and a front flap panel 114. The front flap panel 114 is defined by a flap fold line 142 of the plurality of predefined fold lines 140. The front flap panel 114 of the lid 116 has a first surface 114a and an opposing second surface 114b. In one example, the front flap panel 114 is hingedly connected to the lid 116 of the plurality of wall panels 110 along the flap fold line 142. The front flap panel 114 is shaped and sized to substantially align with the front wall panel 112 when hinged in a closed position such that they abut each other.

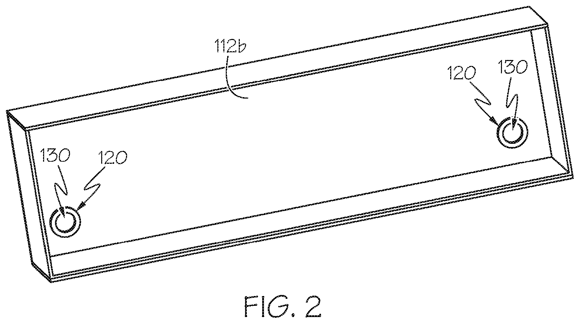

Referring to FIGs. 1-5, the front flap panel 114 comprises at least one closure apparatus 130. The closure apparatus 130 is substantially round about a central axis 139. The at least one closure apparatus 130 is located on the second surface 114b of the front flap panel 114. In one example, the at least one closure apparatus 130 is affixed to the second surface 114b of the front flap panel 114 with an adhesive. In another example, the at least one closure apparatus 130 is integral with the front flap panel 114 (i.e., the front flap panel 114 and the closure apparatus 130 are a single, monolithic body).

The at least one closure apparatus 130 is manufactured from a cellulosic material. Various cellulosic materials may be used as the disclosed at least one closure apparatus 130 without departing from the scope of the present disclosure. General examples of appropriate cellulosic materials useful as or in the at least one closure apparatus 130 include, but are not limited to, fiberboard, pressed pulp, corrugated medium, liner board, solid bleached sulfate (SBS), unbleached kraft, cardboard, fiberboard, paperboard, foamboard and folding boxboard (FBB). As one specific, non-limiting example, the disclosed closure apparatus 130 is manufactured from a paper pulp slurry. As another specific, non-limiting example, the disclosed closure apparatus 130 is manufactured from injection molded paper fiber.

The at least one closure apparatus 130 is aligned with the opening 120 of the front wall panel 112 and is sized and shaped to be closely received within the opening 120 of the front wall panel 112. The at least one closure apparatus 130 comprises a three-dimensional body 130a. The three-dimensional body 130a is approximately 1mm thick to approximately 10mm thick and has a circumference of approximately 18mm to approximately 24mm. In one example, the three-dimensional body 130a is approximately 4mm thick to approximately 6mm thick and has a circumference of approximately 20mm to approximately 22mm. The three-dimensional body 130a includes a plug portion 134. The plug portion 134 protrudes about a central axis 139 relative to the second surface 114b. The plug portion 134 has a circumference that extends laterally along a lateral axis 137.

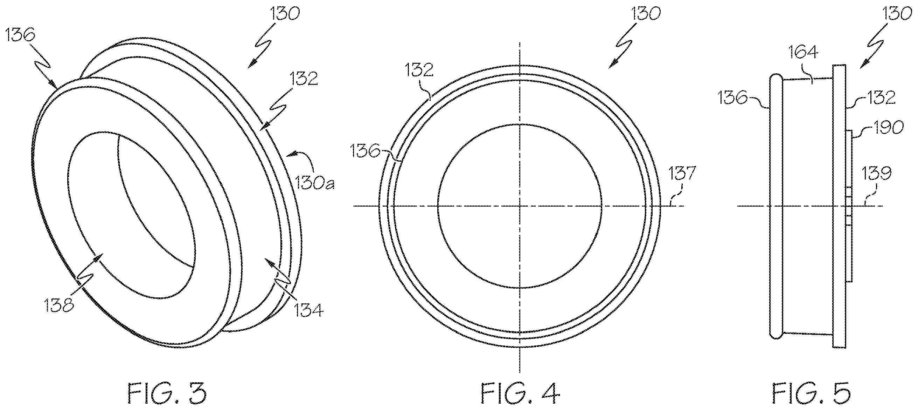

In one example, the plug portion 134 is substantially hollow, see FIG. 3, such that a plug internal volume 138 is defined. The plug internal volume 138 extends along the central axis 139 between a base portion 132 and a lip portion 136. The plug internal volume 138 is substantially cylindrical.

Referring to FIG. 4, the base portion 132 has a larger circumference than the plug portion 134 and the lip portion 136. In another example, the base portion 132 has a circumference that is substantially the same as the circumference of the plug portion 134. In one example, the lip portion 136 is substantially rounded along its perimeter. In another example, the lip portion 136 is substantially beveled along its perimeter. Similarly, the base portion 132 may have a substantially rounded perimeter or a substantially beveled perimeter. In one example, the base portion 132, plug portion 134, and lip portion 136 are integral such that they are a single, monolithic body.

Referring to FIG. 5, the at least one closure apparatus 130 further includes a backpiece 190. The backpiece 190 is positioned between the base portion 132 and the second surface 114b of the front flap panel 114. In one example, the backpiece 190 is integral with the three-dimensional body 130a such that it is a single, monolithic body.

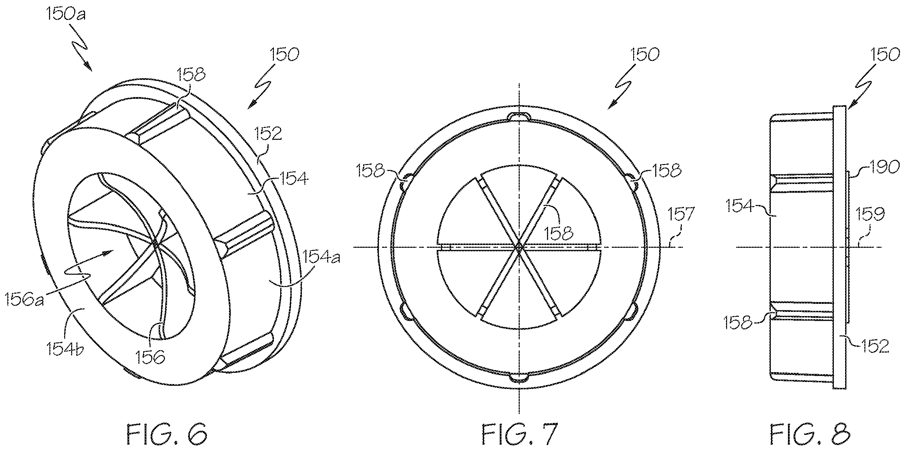

Referring to FIGs. 6-8, disclosed is an example of a closure apparatus 150. The closure apparatus 150 is substantially round about a central axis 159. The closure apparatus 150 includes a three-dimensional body 150a having a plug portion 154. The plug portion 154 has an outer surface 154b and an inner surface 154a that abuts a base portion 152. In one example, the plug portion 154 comprises a plurality of protrusions 158. The plurality of protrusions 158 are equidistantly spaced apart a circumference of the plug portion 154.

In one example, the base portion 152 has a larger circumference than the plug portion 154 along a lateral axis 157. In another example, the base portion 152 has a circumference that is substantially the same as the circumference of the plug portion 154. The plug portion 154 is substantially hollow such that an internal volume 156a is defined. A plurality of ribs 156 extend radially from the central axis 159 along the lateral axis 157. In one example, the plurality of ribs 156 have a ramped configuration such that they are flush with the height of the plug portion 154 where they abut the plug portion 154 and slope to a shallower height where they meet along the central axis 159.

In one example the plug portion 154 along the outer surface 154b is substantially beveled along its perimeter. In another example, the plug portion 154 along the outer surface 154b is substantially rounded along its perimeter. Similarly, in one example, the base portion 152 is substantially beveled along its perimeter. Alternatively, the base portion 152 is substantially beveled along its perimeter.

Referring to FIG. 8, the closure apparatus 150 further includes a backpiece 190. The backpiece 190 is positioned between the base portion 152 and a second surface 114b of a front flap panel 114 of a container 100. In one example, the backpiece 190 is integral with the three-dimensional body 150a such that it is a single, monolithic body.

The closure apparatus 150 comprises a cellulosic material and is made from either a paper pulp slurry or injection molded paper fiber such that it is biodegradable. Various cellulosic materials may be used as the disclosed closure apparatus 150 without departing from the scope of the present disclosure. Examples of appropriate materials useful as the closure apparatus 150 include, but are not limited to, corrugated medium, liner board, solid bleached sulfate (SBS), unbleached kraft, cardboard, fiberboard, paperboard, foamboard and folding boxboard (FBB).

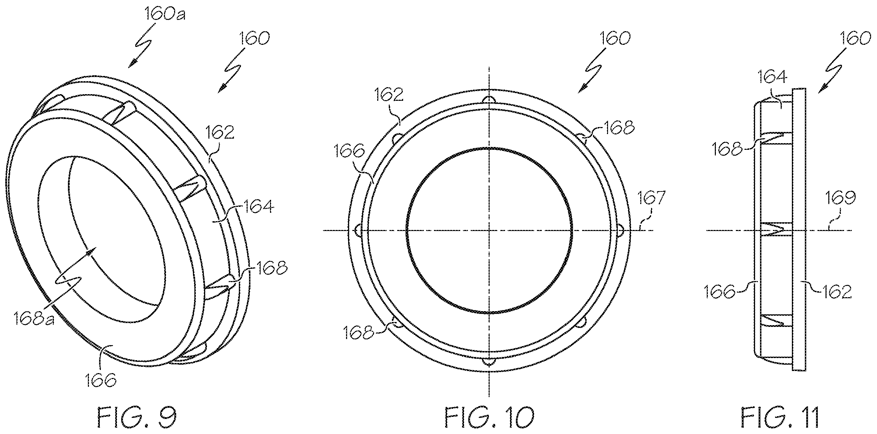

Referring to FIGs. 9-11, disclosed is an example of a closure apparatus 160. The closure apparatus 160 is substantially round about a central axis 169. The closure apparatus 160 includes a three-dimensional body 160a having a plug portion 164. The three-dimensional body 160a further includes a base portion 162 and a lip portion 166. In one example, the circumference of the base portion 162 is larger than the circumference of the plug portion 164. In another example, the circumference of the base portion 162 is substantially the same as the circumference of the plug portion 164.

In one example, the plug portion 164 is substantially hollow such that a plug internal volume 168a is defined. The plug internal volume 168a extends along the central axis 169 between the base portion 162 and the lip portion 166. The plug portion 164 comprises a plurality of protrusions 168. The plurality of protrusions 168 are equidistantly spaced apart around a circumference of the plug portion 164 and extend along a lateral axis 167.

In one example the lip portion 166 is substantially beveled along its perimeter. In another example, the lip portion 166 is substantially rounded along its perimeter. Similarly, in one example, the base portion 162 is substantially beveled along its perimeter. Alternatively, the base portion 162 is substantially beveled along its perimeter.

The closure apparatus 160 comprises a cellulosic material and is made from either a paper pulp slurry or injection molded paper fiber such that it is biodegradable. Various cellulosic substrates may be used as the disclosed closure apparatus 160 without departing from the scope of the present disclosure. Examples of appropriate materials useful as the closure apparatus 160 include, but are not limited to, corrugated medium, liner board, solid bleached sulfate (SBS), unbleached kraft, cardboard, fiberboard, paperboard, foamboard and folding boxboard (FBB).

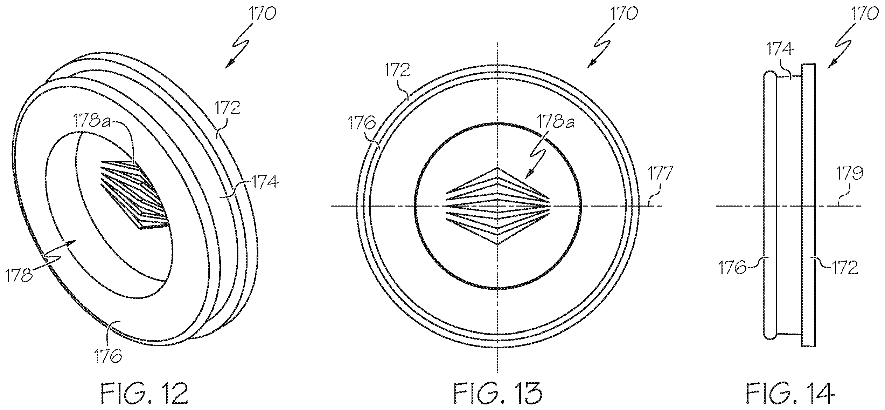

Referring to FIGs. 12-14, disclosed is an example of a closure apparatus 170. The closure apparatus 170 is substantially round about a central axis 179. The closure apparatus 170 includes a three-dimensional body 170a having a plug portion 174. The three-dimensional body 170a further includes a lip portion 176 and a base portion 172. In one example, the circumference of the base portion 172 is larger than the circumference of the plug portion 174. In another example, the circumference of the base portion 172 is substantially the same as the circumference of the plug portion 174.

The plug portion 174 extends laterally along a lateral axis 177. In one example, the plug portion 174 is substantially hollow such that a plug internal volume 178 is defined. The plug internal volume 178 extends along the central axis 179 between the base portion 172 and the lip portion 176.

In one example the lip portion 176 is substantially beveled along its perimeter. In another example, the lip portion 176 is substantially rounded along its perimeter. Similarly, in one example, the base portion 172 is substantially beveled along its perimeter. Alternatively, the base portion 172 is substantially beveled along its perimeter.

In one example, the closure apparatus 170 comprises advertising indicia 178a. The advertising indicia 178a may be located within the plug internal volume 178 of the plug portion 174. In one example, the advertising indicia 178a is embossed. In another example, the advertising indicia 178a is printed.

The closure apparatus 170 comprises a cellulosic material and is made from either a paper pulp slurry or injection molded paper fiber such that it is biodegradable. Various cellulosic substrates may be used as the disclosed closure apparatus 170 without departing from the scope of the present disclosure. Examples of appropriate materials useful as the closure apparatus 170 include, but are not limited to, corrugated medium, liner board, solid bleached sulfate (SBS), unbleached kraft, cardboard, fiberboard, paperboard, foamboard and folding boxboard (FBB).

## Claims

1. A container (100) comprising:
a plurality of wall panels (110) that define an internal volume, the plurality of wall panels (110) comprising a front wall panel (112),
a lid (116) connected to one of the plurality of wall panels (110), the lid (116) comprising a cover panel (118) and a front flap panel (114) defined by a flap fold line (142), the front flap panel (114) having a first surface (114a) and an opposing second surface (114b); and
a closure apparatus (130; 150; 160; 170) **characterised in that** the front wall panel (112) defines an opening (120); and that the closure apparatus (130; 150; 160; 170) is affixed to the second surface (114b) of the front flap panel (114), the closure apparatus (130; 150; 160; 170) being sized and shaped to be closely received with the opening (120) in the front wall panel (112), wherein the closure apparatus (130; 150; 160; 170) comprises a cellulosic material.

2. The container of claim 1, wherein the closure apparatus (130; 150; 160; 170) is connected to the second surface (114b) with an adhesive.

3. The container of claim 1, wherein the closure apparatus (130; 150; 160; 170) is integral with the front flap panel (114).

4. The container of any preceding claim, wherein the closure apparatus (130; 150; 160; 170) comprises a three-dimensional body (130a; 150a; 160a; 170a) having a plug portion (134; 154; 164; 174).

5. The container of claim 4, wherein three-dimensional body (130a; 150a; 160a; 170a) comprises a base portion (132; 152; 162; 172).

6. The container of claim 5, wherein the plug portion (134; 154; 164; 174) is integral with the base portion (132; 152; 162; 172) such that it is a single, monolithic body.

7. The container of claim 5 or 6, wherein the base portion (131; 152; 162; 172) has a larger circumference than a circumference of the plug portion (134; 154; 164; 174).

8. The container of any of claims 4 to 7, wherein the three-dimensional body (130a; 150a; 160a; 170a) is substantially hollow in the plug portion (134; 154; 164; 174).

9. The container of any of claims 4 to 8, wherein the plug portion (154; 164) comprises a plurality of protrusions (158; 168) equidistantly spaced about a or the circumference of the plug portion (154; 164).

10. The container of any of claims 4 to 9, wherein the plug portion comprises a lip portion (136; 166; 176).

11. The container of any of claims 4 to 10, wherein the three-dimensional body (150a) comprises a plurality of ribs (156) extending radially from a central axis (159) along a lateral axis (157).

12. The container of any preceding claim, wherein the front flap panel (114) is hingedly connected to the lid (116) of the plurality of wall panels (110) along the flap fold line (142).

13. The container of any preceding claim, wherein the plurality of wall panels (110) are biodegradable.

## Patentansprüche

1. Behälter (100), umfassend:
eine Vielzahl von Wandpaneelen (110), die ein Innenvolumen definieren, wobei die Vielzahl von Wandpaneelen (110) ein vorderes Wandpaneel (112) umfasst,
einen Deckel (116), der mit einem der Vielzahl von Wandpaneelen (110) verbunden ist, wobei der Deckel (116) ein Abdeckpaneel (118) und ein vorderes Klappenpaneel (114) umfasst, das durch eine Klappenfaltlinie (142) definiert ist, wobei das vordere Klappenpaneel (114) eine erste Oberfläche (114a) und eine gegenüberliegende zweite Oberfläche (114b) aufweist; und
eine Verschlussvorrichtung (130; 150; 160; 170), **dadurch gekennzeichnet, dass** das vordere Wandpaneel (112) eine Öffnung (120) definiert; und dass die Verschlussvorrichtung (130; 150; 160; 170) an der zweiten Oberfläche (114b) des vorderen Klappenpaneels (114) befestigt ist, wobei die Verschlussvorrichtung (130; 150; 160; 170) so bemessen und geformt ist, dass sie eng mit der Öffnung (120) in dem vorderen Wandpaneel (112) aufgenommen ist, wobei die Verschlussvorrichtung (130; 150; 160; 170) ein Zellulosematerial umfasst.

2. Behälter nach Anspruch 1, wobei die Verschlussvorrichtung (130; 150; 160; 170) mit der zweiten Oberfläche (114b) mit einem Klebstoff verbunden ist.

3. Behälter nach Anspruch 1, wobei die Verschlussvorrichtung (130; 150; 160; 170) mit dem vorderen Klappenpaneel (114) integriert ist.

4. Behälter nach einem der vorstehenden Ansprüche, wobei die Verschlussvorrichtung (130; 150; 160; 170) einen dreidimensionalen Körper (130a; 150a; 160a; 170a) umfasst, der einen Steckerabschnitt (134; 154; 164; 174) aufweist.

5. Behälter nach Anspruch 4, wobei der dreidimensionale Körper (130a; 150a; 160a; 170a) einen Basisabschnitt (132; 152; 162; 172) umfasst.

6. Behälter nach Anspruch 5, wobei der Steckerabschnitt (134; 154; 164; 174) einstückig mit dem Basisabschnitt (132; 152; 162; 172) ist, sodass er einen einzigen, monolithischen Körper bildet.

7. Behälter nach Anspruch 5 oder 6, wobei der Basisabschnitt (131; 152; 162; 172) einen größeren Umfang aufweist als ein Umfang des Steckerabschnitts (134; 154; 164; 174).

8. Behälter nach einem der Ansprüche 4 bis 7, wobei der dreidimensionale Körper (130a; 150a; 160a; 170a) in dem Steckerabschnitt (134; 154; 164; 174) im Wesentlichen hohl ist.

9. Behälter nach einem der Ansprüche 4 bis 8, wobei der Steckerabschnitt (154; 164) eine Vielzahl von Vorsprüngen (158; 168) umfasst, die in gleichem Abstand um einen oder den Umfang des Steckerabschnitts (154; 164) angeordnet sind.

10. Behälter nach einem der Ansprüche 4 bis 9, wobei der Steckerabschnitt einen Lippenabschnitt (136; 166; 176) umfasst.

11. Behälter nach einem der Ansprüche 4 bis 10, wobei der dreidimensionale Körper (150a) eine Vielzahl von Rippen (156) umfasst, die sich radial von einer Mittelachse (159) entlang einer Seitenachse (157) erstrecken.

12. Behälter nach einem der vorstehenden Ansprüche, wobei das vordere Klappenpaneel (114) mit dem Deckel (116) der Vielzahl von Wandpaneelen (110) entlang der Klappenfaltlinie (142) gelenkig verbunden ist.

13. Behälter nach einem der vorstehenden Ansprüche, wobei die Vielzahl von Wandplatten (110) biologisch abbaubar ist.

## Revendications

1. Récipient (100) comprenant :
une pluralité de panneaux de paroi (110) qui délimitent un volume interne, la pluralité de panneaux de paroi (110) comprenant un panneau de paroi avant (112),
un couvercle (116) relié à l'un de la pluralité de panneaux de paroi (110), le couvercle (116) comprenant un panneau de couvercle (118) et un panneau de rabat avant (114) délimité par une ligne de pliage de rabat (142), le panneau de rabat avant (114) présentant une première surface (114a) et une seconde surface opposée (114b) ; et
un appareil de fermeture (130 ; 150 ; 160 ; 170), **caractérisé en ce que** le panneau de paroi avant (112) délimite une ouverture (120) ; et **en ce que** l'appareil de fermeture (130 ; 150 ; 160 ; 170) est fixé à la seconde surface (114b) du panneau de rabat avant (114), l'appareil de fermeture (130 ; 150 ; 160 ; 170) étant dimensionné et formé pour être étroitement reçu avec l'ouverture (120) dans le panneau de paroi avant (112), dans lequel l'appareil de fermeture (130 ; 150 ; 160 ; 170) comprend un matériau cellulosique.

2. Récipient selon la revendication 1, dans lequel l'appareil de fermeture (130 ; 150 ; 160 ; 170) est relié à la seconde surface (114b) avec un adhésif.

3. Récipient selon la revendication 1, dans lequel l'appareil de fermeture (130 ; 150 ; 160 ; 170) est d'un seul tenant avec le panneau de rabat avant (114).

4. Récipient selon l'une quelconque des revendications précédentes, dans lequel l'appareil de fermeture (130 ; 150 ; 160 ; 170) comprend un corps tridimensionnel (130a ; 150a ; 160a ; 170a) présentant une partie bouchon (134 ; 154 ; 164 ; 174).

5. Récipient selon la revendication 4, dans lequel le corps tridimensionnel (130a ; 150a ; 160a ; 170a) comprend une partie base (132 ; 152 ; 162 ; 172).

6. Récipient selon la revendication 5, dans lequel la partie bouchon (134 ; 154 ; 164 ; 174) est d'un seul tenant avec la partie base (132 ; 152 ; 162 ; 172) de façon à former un corps monolithique unique.

7. Récipient selon la revendication 5 ou la revendication 6, dans lequel la partie base (131 ; 152 ; 162 ; 172) présente une circonférence plus grande qu'une circonférence de la partie bouchon (134 ; 154 ; 164 ; 174).

8. Récipient selon l'une quelconque des revendications 4 à 7, dans lequel le corps tridimensionnel (130a ; 150a ; 160a ; 170a) est sensiblement creux dans la partie bouchon (134 ; 154 ; 164 ; 174).

9. Récipient selon l'une quelconque des revendications 4 à 8, dans lequel la partie bouchon (154 ; 164) comprend une pluralité de saillies (158 ; 168) espacées de manière équidistante autour d'une ou de la circonférence de la partie bouchon (154 ; 164).

10. Récipient selon l'une quelconque des revendications 4 à 9, dans lequel la partie bouchon comprend une partie lèvre (136 ; 166 ; 176).

11. Récipient selon l'une quelconque des revendications 4 à 10, dans lequel le corps tridimensionnel (150a) comprend une pluralité de nervures (156) s'étendant radialement depuis un axe central (159) le long d'un axe latéral (157).

12. Récipient selon l'une quelconque des revendications précédentes, dans lequel le panneau de rabat avant (114) est relié de manière articulée au couvercle (116) de la pluralité de panneaux de paroi (110) le long de la ligne de pliage de rabat (142).

13. Récipient selon l'une quelconque des revendications précédentes, dans lequel la pluralité de panneaux de paroi (110) sont biodégradables.
